(19) Europäisches Patentamt
European Patent Office
Office européen des brevets

(11) EP 1 089 878 B1

# (12) EUROPÄISCHE PATENTSCHRIFT

(45) Veröffentlichungstag und Bekanntmachung des Hinweises auf die Patenterteilung:
**15.05.2002 Patentblatt 2002/20**

(21) Anmeldenummer: **99927839.3**

(22) Anmeldetag: **02.06.1999**

(51) Int Cl.[7]: **B32B 27/32**, C08F 210/16

(86) Internationale Anmeldenummer:
**PCT/EP99/03811**

(87) Internationale Veröffentlichungsnummer:
**WO 99/67094 (29.12.1999 Gazette 1999/52)**

(54) **SIEGELBARE MEHRSCHICHTFOLIE AUS EINEM PROPEN-TERPOLYMEREN**

SEALABLE MULTILAYER FILM MADE OF A GRAFTED TERPOLYMER

FILM STRATIFIE SCELLABLE CONSTITUE D'UN TERPOLYMERE DE PROPYLENE

(84) Benannte Vertragsstaaten:
**AT BE DE ES FR GB IT NL**

(30) Priorität: **19.06.1998 DE 19827327**

(43) Veröffentlichungstag der Anmeldung:
**11.04.2001 Patentblatt 2001/15**

(73) Patentinhaber: **Basell Polyolefine GmbH**
**67056 Ludwigshafen (DE)**

(72) Erfinder:
- **FISCHER, David**
  **D-67725 Breunigweiler (DE)**
- **MARCZINKE, Bernd, Lothar**
  **D-67354 Heiligenstein (DE)**
- **SCHÖNE, Werner**
  **D-69198 Schriesheim (DE)**
- **LANGHAUSER, Franz**
  **D-67152 Ruppertsberg (DE)**
- **BIDELL, Wolfgang**
  **D-67112 Mutterstadt (DE)**
- **HINGMANN, Roland**
  **D-68526 Ladenburg (DE)**
- **MOLL, Ulrich**
  **D-67487 St. Martin (DE)**
- **KERSTING, Meinolf**
  **D-67435 Neustadt (DE)**
- **SCHWEIER, Günther**
  **D-67159 Friedelsheim (DE)**
- **JONES, Peter, John, Vaughan**
  **Billingham, Cleveland (GB)**

(56) Entgegenhaltungen:
**EP-A- 0 668 157**
**EP-A- 0 803 352**
**US-A- 4 692 379**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 089 878 B1

Printed by Jouve, 75001 PARIS (FR)

## Beschreibung

Die vorliegende Erfindung betrifft eine siegelbare Mehrschichtfolie aus mindestens einer Deckschicht und mindestens einer Basisschicht, wobei die Deckschicht aus einem Propylen-Terpolymeren besteht, enthaltend 80 bis 99,5 mol-% Struktureinheiten, die sich vom Propylen ableiten, 0,2 bis 15 mol-% Struktureinheiten, die sich von Ethen oder einem $C_4$-$C_6$-1-Olefin (I) ableiten und 0,3 bis 15 mol-% Struktureinheiten, die sich von einem weiteren, vom $C_4$-$C_6$-1-Olefin (I) verschiedenen, $C_4$-$C_{12}$-1-Olefin (II) ableiten enthält und wobei das Propylen-Terpolymere mittels Metallocen-Katalysatoren hergestellt ist.

Weiterhin betrifft die vorliegende Erfindung ein Verfahren zur Herstellung einer siegelbaren Mehrschichtfolie sowie Verpackungen aus den siegelbaren Mehrschichtfolien.

Folien aus Polypropylen finden breite Anwendung im Verpackungsbereich und besitzen dort eine erhebliche technische Bedeutung. Dies gilt insbesondere auch für sogenannte biaxial orientierte Polypropylen-Folien (BOPP-Folien). Dabei ist in vielen Fällen eine gute Siegelfähigkeit der Folien erwünscht, d.h. die Folien sollen sich bereits bei Temperaturen deutlich unterhalb ihres Kristallitschmelzpunktes miteinander verbinden lassen. Eine große Differenz zwischen der hierfür erforderlichen Siegeltemperatur und dem Kristallitschmelzpunkt ist hierbei besonders günstig. Ein in der Technik weit verbreiteter Ansatz, dies zu erreichen, sind mehrlagige Polypropylenfolien, die Deckschichten mit besonders niedrigen Siegeltemperaturen tragen. Als siegelbare Deckschicht werden hierbei gewöhnlich Propylenco- oder -terpolymere eingesetzt, bei denen durch den Comonomereinbau sowohl der Kristallitschmelzpunkt, wie auch die für das Siegeln notwendige Temperatur, herabgesetzt sind. Mit zunehmendem Comonomereinbau nimmt die Siegeltemperatur ab und damit die Eignung als Siegelschichtmaterial zu. Allerdings steigt, zumindest bei konventionellen, d.h. mit Ziegler-Natta-Katalysatoren hergestellten Co- und Terpolymeren, auch der Anteil niedermolekularer, amorpher, und deshalb bei 25°C in Xylol löslicher, Bestandteile mit zunehmendem Comonomergehalt stark an. Hierdurch werden Polymer und Folie zunehmend klebrig, bei gleichzeitig schlechter werdender Organoleptik.

Mit Metallocen-Katalysatoren hergestellte Propylencopolymere zeigen im Unterschied zu konventionellen Copolymeren einen wesentlich geringeren Anteil xylollöslicher Bestandteile und eignen sich daher in besonderem Maße als Siegelschichtmaterialien (WO-A 95/32235, EP-A 668 157, DE-A 19 53 33 37). Darüber hinaus sind die Metall- und Druckfarbenhaftung auf Deckschichten aus metallocenkatalysierten Copolymeren deutlich besser und Mehrschichtfolien mit entsprechenden Deckschichten zeichnen sich zudem durch gute optische Eigenschaften, wie hohe Transparenz und hohen Glanz aus.

Für einige Anwendungsbereiche ist es aber wünschenswert, siegelbare Mehrschichtfolien einsetzen zu können, die eine nochmals vergrößerte Differenz zwischen Siegeltemperatur und Kristallitschmelzpunkt der Siegelschicht besitzen und ferner hinsichtlich ihrer Organoleptik nochmals verbessert sind, wobei diese hinsichtlich Glanz, Transparenz und Haftung ebenso gute Eigenschaften aufweisen sollen wie die bereits bekannten Mehrschichtfolien, die Propylencopolymere enthalten, welche mittels Metallocen-Katalysatoren hergestellt wurden.

In US-A-4 692 379 wird eine siegelbare Mehrschichtfolie beschrieben, die einen niedrigen Bruchkoeffizienten, gute Aufnahmeeigenschaften für aus Wasser aufgebaute Coatings und gute optische Klarheit aufweist. Die Deckschicht besteht aus einem Ethylen-Propylen-Copolymer oder einem Terpolymer oder aus einer Mischung, während die Basisschicht aus Polypropylen besteht. Eine untere Deckschicht besteht aus demselben Material wie die obere Deckschicht. Das Terpolymer besteht aus Buten-1,3-6 Gew.-% Ethen und 86-93 Gew.-% Propylen. Metallocen-Katalysatoren werden nicht erwähnt.

Aufgabe der vorliegenden Erfindung war es daher, ausgehend von den bereits bekannten siegelbaren Mehrschichtfolien auf der Basis von mittels Metallocen-Katalysatoren hergestellten Propylencopolymeren nochmals hinsichtlich einer abgesenkten Siegeltemperatur und der Organoleptik verbesserte siegelbare Mehrschichtfolien zu entwickeln.

Demgemäß wurden die eingangs definierten siegelbaren Mehrschichtfolien gefunden.

Weiterhin wurde ein Verfahren zur Herstellung der erfindungsgemäßen siegelbaren Mehrschichtfolien gefunden, sowie Verpackungen aus den siegelbaren Mehrschichtfolien.

Die erfindungsgemäße siegelbare Mehrschichtfolie enthält mindestens eine Deckschicht und mindestens eine Basisschicht, wobei die Deckschicht aus einem Propylen-Terpolymeren besteht.

Die in den erfindungsgemäßen siegelbaren Mehrschichtfolien enthaltenen Propylen-Terpolymere weisen 80 bis 99,5 mol-% Struktureinheiten auf, die sich vom Propylen ableiten, bevorzugt 85 bis 99 mol-%, insbesondere 87 bis 98 mol-%, ferner 0,2 bis 15 mol-% Struktureinheiten, die sich von Ethen oder einem $C_4$-$C_6$-1-Olefin (I) ableiten, bevorzugt 0,5 bis 13 mol-%, insbesondere 0,5 bis 10 mol-%, sowie 0,3 bis 15 mol-% Struktureinheiten, die sich von einem weiteren, von $C_4$-$C_6$-1-Olefin (1) verschiedenen, $C_4$-$C_{12}$-1-Olefin (II) ableiten, bevorzugt 0,3 bis 12 mol-%, insbesondere 0,3 bis 10 mol-%. Die Summe der mol-% ergibt dabei stets 100.

Geeignete $C_4$-$C_6$-1-Olefine (I) sind u.a. But-1-en, Pent-1-en, 4-Methyl-pent-1-en oder Hex-1-en, wobei vorzugsweise But-1-en, Pent-1-en oder Hex-1-en verwendet werden.

Unter der Bezeichnung $C_4$-$C_{12}$-1-Olefine (II) sollen vor allem But-1-en, Pent-1-en, 4-Methyl-pent-1-en, Hex-1-en, Hept-1-en oder Oct-1-en verstanden werden, wobei But-1-en, Pent-1-en und Hex-1-en besonders bevorzugt eingesetzt werden.

Der Schmelzpunkt ($T_M$) der eingesetzten Propylen-Terpolymere, ermittelt nach dem DSC-Peakmaximum, beträgt weniger als 135°C, insbesondere weniger als 130°C. Die in den Propylen-Terpolymeren vorliegenden Monomereinheiten sind zu mehr als 80 % isotaktisch angeordnet.

Die Propylen-Terpolymere weisen ferner ein Gewichtsmittel der Molmasse ($M_W$) von mehr als 80.000 g/mol, insbesondere von mehr als 150.000 g/mol auf. Das Gewichtsmittel der Molmasse ($M_W$) wird hierbei ermittelt durch Gelpermeationschromatographie. Die Schmelzenthalpie der Propylen-Terpolymere liegt oberhalb von 20 J/g, insbesondere oberhalb von 50 J/g.

Weiterhin sind die erfindungsgemäß einzusetzenden Propylen-Terpolymere u.a. auch dadurch gekennzeichnet, daß sie einen Anteil regioregulärer '1-2'-insertierter Propyleneinheiten entsprechend der Formel (1)

$$\frac{['1\text{-}2']}{['1\text{-}2']+['2\text{-}1']+['1\text{-}3']} \qquad (1)$$

von mehr als 0,97, insbesondere von mehr als 0,99 aufweisen. Die regioreguläre '1-2'-Insertion von Propen sowie die regioirreguläre '2-1'-Insertion und die ebenfalls regioirreguläre '1-3'-Insertion, sind u.a. aus P. Pino et al., Angew. Chemie 92, 869 (1980) oder aus A. Zambelli et al. Macromolecules 21, 617 (1988) bekannt.

Die Bestimmung der jeweiligen Anteile der regioregulären '1-2'-Insertion und der regioirregulären '2-1'-Insertion sowie der regioirregulären '1-3'-Insertion erfolgt u.a. durch $^{13}$C-NMR-Spektroskopie, wie in A. Zambelli et al., Macromolecules 21, 617 (1988) beschrieben.

Die Menge des xylollöslichen Anteils ($X_L$) in Gew.-% der Propylen-Terpolymeren gehorcht der nachfolgenden Ungleichung (2)

$$X_L \leq 1411{,}21 \exp(-0{,}0591\ T_M) - 0{,}05 \qquad (2)$$

wobei $T_M$ für den Schmelzpunkt der Propylen-Terpolymeren in °C steht.

Bevorzugte erfindungsgemäß einzusetzende Propylen-Terpolymere weisen ferner eine Polydispersität ($M_W/M_N$) von weniger als 2,25, speziell von weniger als 2,1 und insbesondere von weniger als 2,0 auf. Die Bestimmung der Polydispersität ($M_w/M_n$) erfolgt vorzugsweise mit Hilfe der Gelpermeationschromatographie unter Verwendung von 1,2,4-Trichlorbenzol als Lösungsmittel.

Die Herstellung der erfindungsgemäß einzusetzenden Propylen-Terpolymere erfolgt mittels Metallocenkatalysatoren vorzugsweise nach einem Verfahren, welches dadurch gekennzeichnet ist, daß man die Comonomere in Anwesenheit eines Metallocen-Katalysatorsystems polymerisiert, welches

A) einen anorganischen oder einen organischen Träger,

B) mindestens einen Metallocen-Komplex und

C) wenigstens eine metalloceniumionenbildende Verbindung

aufweist, wobei aber keine zwei verschiedenen Alumoxane als Komponente C) verwendet werden.

Das in diesem Verfahren verwendete Metallocen-Katalysatorsystem kann ferner neben den Komponenten A), B) oder C) noch mindestens eine organische Metallverbindung eines Alkali- oder Erdalkalimetalls oder eines Metalls der III. Hauptgruppe des Periodensystems enthalten.

Die Polymerisation zur Herstellung der in den erfindungsgemäßen siegelbaren Mehrschichtfolien eingesetzten Propylen-Terpolymere mit Hilfe derartiger Metallocen-Katalysatorsysteme wird bei Temperaturen im Bereich von -50 bis 300°C, vorzugsweise im Bereich von 0 bis 150°C, und bei Drücken im Bereich von 0,5 bis 3.000 bar, vorzugsweise im Bereich von 1 bis 100 bar, durchgeführt. Bei diesem ebenfalls erfindungsgemäßen Verfahren sollen die Verweilzeiten der jeweiligen Reaktionsgemische auf 0,5 bis 5 Stunden, insbesondere auf 0,7 bis 3,5 Stunden, eingestellt werden. Es können bei der Polymerisation u.a. auch Antistatika sowie Molmassenregler, beispielsweise Wasserstoff, mitverwendet werden.

Ferner können bei der Polymerisation in geringem Umfang, d.h. weniger als 0,5 mol-%, noch andere $C_4$-$C_{12}$-1-Olefine einpolymerisiert werden.

Die Polymerisation kann in Lösung, in Suspension, in flüssigen Monomeren oder in der Gasphase durchgeführt werden. Bevorzugt erfolgt die Polymerisation in flüssigen Monomeren (Bulkverfahren) oder in der Gasphase,

wobei die gerührte Gasphase bevorzugt ist.

Das ebenfalls erfindungsgemäße Verfahren kann sowohl kontinuierlich als auch diskontinuierlich durchgeführt werden. Geeignete Reaktoren sind u.a. kontinuierlich betriebene Rührkessel oder sogenannte loop-Reaktoren (Schleifenreaktoren), wobei man gegebenenfalls auch eine Reihe von mehreren hintereinander geschalteten Rührkesseln oder loop-Reaktoren verwenden kann (Reaktorkaskade).

Die verwendeten Metallocen-Katalysatorsysteme enthalten als Komponente A) einen anorganischen oder einen organischen Träger. Als anorganischer Träger kann dabei auch ein solches anorganisches Oxid verwendet werden, welches einen pH-Wert, ermittelt nach S.R. Morrison, "The Chemical Physics of Surfaces", Plenum Press, New York [1977], Seite 130ff, von 1 bis 6 und Hohlräume und Kanäle aufweist, deren makroskopischer Volumenanteil am Gesamtpartikel im Bereich von 5 bis 30 % liegt. Bevorzugt können dabei insbesondere solche anorganischen Oxide eingesetzt werden, deren pH-Wert, d.h. deren negativer dekadischer Logarithmus der Protonenkonzentration, im Bereich von 2 bis 5,5 zu finden ist.

Es werden als anorganische Träger insbesondere auch solche anorganischen Oxide verwendet, die einem mittleren Teilchendurchmesser von 5 bis 200 µm, insbesondere von 20 bis 90 µm, und einen mittleren Teilchendurchmesser der Primärpartikel von 0,1 bis 20 µm, insbesondere von 0,1 bis 5 µm, aufweisen. Bei den sogenannten Primärpartikeln handelt es sich dabei um poröse, granuläre Partikel. Die Primärpartikel weisen Poren mit einem Durchmesser von insbesondere 1 bis 1000 Å auf. Weiterhin sind die zu verwendenden anorganischen Oxide u.a. auch noch dadurch charakterisiert, daß sie über Hohlräume und Kanäle mit einem mittleren Durchmesser von 0,1 bis 20 µm, insbesondere von 1 bis 15 µm, verfügen. Die anorganischen Oxide weisen ferner insbesondere noch ein Porenvolumen von 0,1 bis 10 $cm^3/g$, bevorzugt von 1,0 bis 5,0 $cm^3/g$, und eine spezifische Oberfläche von 10 bis 1000 $m^2/g$, bevorzugt von 100 bis 500 $m^2/g$, auf. Derartige feinteilige anorganische Oxide sind u.a. durch Sprühtrocknung von gemahlenen Hydrogelen erhältlich und können auch im Handel bezogen werden.

Bevorzugte anorganische Träger sind insbesondere Oxide des Siliciums, des Aluminiums, des Titans oder eines der Metalle der I. bzw. der II. Hauptgruppe des Periodensystems. Als ganz bevorzugtes anorganisches Oxid wird neben Aluminiumoxid oder Magnesiumoxid oder einem Schichtsilikat auch Kieselgel ($SiO_2$) verwendet.

Als Komponente A) können auch sogenannte Cogele, d.h. Gemische von mindestens zwei verschiedenen anorganischen Oxiden, eingesetzt werden.

Weiterhin kann die Katalysatorkomponente A) auch ein organischer Träger sein, beispielsweise ein thermoplastisches Polymer. Bevorzugte organische Träger sind dabei Polymere von Alk-1-enen, insbesondere Propenhomopolymere oder Propencopolymere, ferner Ethenhomopolymere oder Ethencopolymere. Es können auch Polymere des Styrols verwendet werden.

Es werden vorzugsweise pro Gramm Träger, d.h. der Komponente A), 0,1 bis 10000 µmol, insbesondere 5 bis 200 µmol des Metallocenkomplexes, d.h. der Komponente B) eingesetzt.

Als Komponente B) enthält das verwendete Metallocen-Katalysatorsystem mindestens einen oder mehrere Metallocenkomplexe. Als Metallocenkomplexe eigenen sich besonders solche der allgemeinen Formel (I)

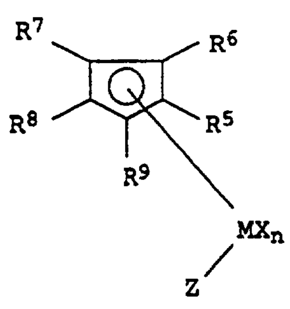

(I)

in der die Substituenten folgende Bedeutung haben:

M Titan, Zirkonium, Hafnium, Vanadium, Niob oder Tantal, sowie Elemente der III. Nebengruppe des Periodensystems und der Lanthanoiden,

X Fluor, Chlor, Brom, Iod, Wasserstoff, $C_1$- bis $C_{10}$-Alkyl, C6- bis $C_{15}$-Aryl, Alkylaryl mit 1 bis 10 C-Atomen im Alkylrest und 6 bis 20 C-Atomen im Arylrest, $-OR^{10}$ oder $-NR^{10}R^{11}$,

n eine ganze Zahl zwischen 1 und 3, wobei n der Wertigkeit von M minus der Zahl 2 entspricht,

wobei

$R^{10}$ und $R^{11}$ — $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,

$R^5$ bis $R^9$ — Wasserstoff, $C_1$- bis $C_{10}$-Alkyl, 5- bis 7gliedriges Cycloalkyl, das seinerseits ein $C_1$- bis $C_{10}$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können, welche wiederum mit einem $C_1$-$C_8$-Alkyl oder $C_6$-$C_{10}$-Aryl oder einem $C_7$-$C_{20}$-Arylalkyl substituiert sein können oder $Si(R^{12})_3$ mit

$R^{12}$ — $C_1$- bis $C_{10}$-Alkyl, $C_3$- bis $C_{10}$-Cycloalkyl oder $C_6$- bis $C_{15}$-Aryl,

Z — für X oder

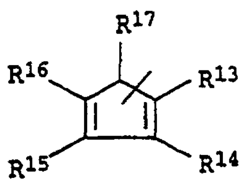

steht,

wobei die Reste

$R^{13}$ bis $R^{17}$ — Wasserstoff, $C_1$- bis $C_{10}$-Alkyl, 5- bis 7gliedriges Cycloalkyl, das seinerseits ein $C_1$- bis $C_{10}$-Alkyl als Substituent tragen kann, $C_6$- bis $C_{15}$-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, welche wiederum mit einem $C_1$-$C_8$-Alkyl oder $C_6$-$C_{20}$-Aryl oder einem $C_7$-$C_{20}$-Arylalkyl substituiert sein können oder $Si(R^{18})_3$ mit

$R^{18}$ — $C_1$- bis $C_{10}$-Alkyl, $C_6$- bis $C_{15}$-Aryl oder $C_3$- bis $C_{10}$-Cycloalkyl,

oder wobei die Reste $R^8$ und Z gemeinsam eine Gruppierung -$R^{19}$-Abilden, in der

$R^{19}$

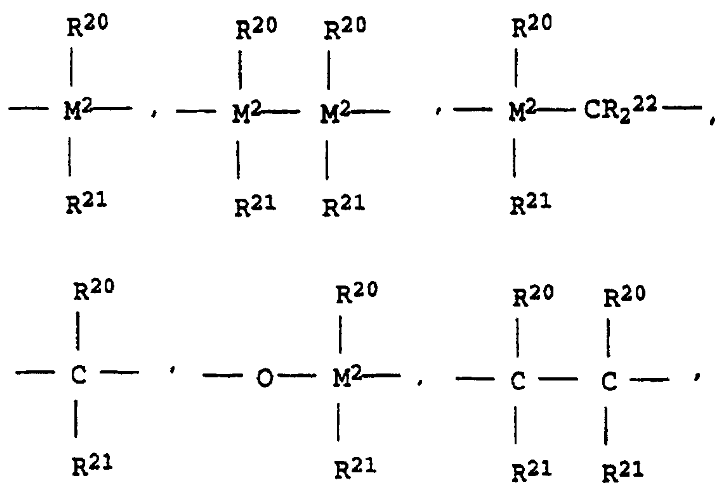

= $BR^{20}$, = $AlR^{20}$, -Ge-, -Sn-, -O-, -S-, = SO, = $SO_2$, = $NR^{20}$, = CO, = $PR^{20}$ oder = $P(O)R^{20}$ ist, wobei

$R^{20}$, $R^{21}$ und $R^{22}$ — gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine

$C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder wobei zwei benachbarte Reste jeweils mit den sie verbindenden Atomen einen Ring bilden, und

$M^2$ Silicium, Germanium oder Zinn ist,

A —O—, —S—, $>NR^{23}$ oder $>PR^{23}$ bedeuten, mit

$R^{23}$ $C_1$- bis $C_{10}$-Alkyl, $C_6$- bis $C_{15}$-Aryl, $C_3$- bis $C_{10}$-Cycloalkyl, Alkylaryl oder $Si(R^{24})_3$,

$R^{24}$ Wasserstoff, $C_1$- bis $C_{10}$-Alkyl, $C_6$- bis $C_{15}$-Aryl, das seinerseits mit $C_1$- bis $C_4$-Alkylgruppen substituiert sein kann oder $C_3$- bis $C_{10}$-Cycloalkyl

oder wobei die Reste $R^8$ und $R^{16}$ gemeinsam eine Gruppierung $-R^{19}$-bilden.

Von den Metallocenkomplexen der allgemeinen Formel I sind

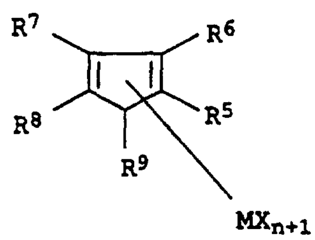

Ia,

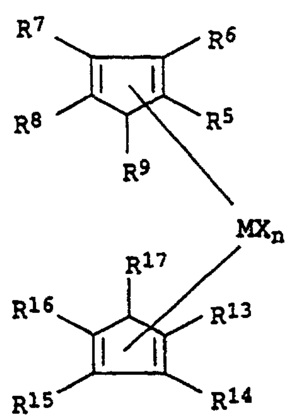

Ib,

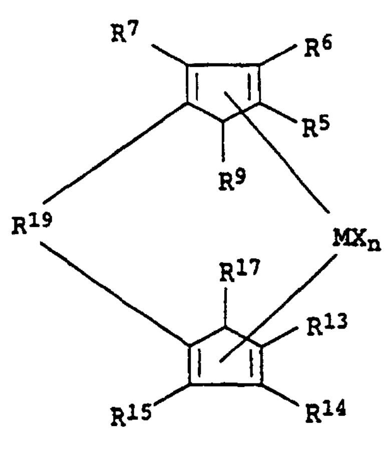

Ic und

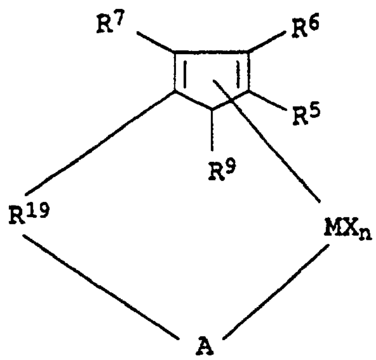

Id

bevorzugt.

Die Reste X können gleich oder verschieden sein, bevorzugt sind sie gleich.

Von den Verbindungen der Formel Ia sind insbesondere diejenigen bevorzugt, in denen

| | |
|---|---|
| M | Titan, Zirkonium oder Hafnium, |
| X | Chlor, $C_1$-bis $C_4$-Alkyl oder Phenyl, |
| n | die Zahl 2 und |
| $R^5$ bis $R^9$ | Wasserstoff oder $C_1$- bis $C_4$-Alkyl bedeuten. |

Von den Verbindungen der Formel Ib sind als bevorzugt diejenigen zu nennen, bei denen

| | |
|---|---|
| M | für Titan, Zirkonium oder Hafnium steht, |
| X | Chlor, $C_1$-bis $C_4$-Alkyl oder Phenyl, |
| n | die Zahl 2, |
| $R^5$ bis $R^9$ | Wasserstoff, $C_1$- bis $C_4$-Alkyl oder $Si(R^{12})_3$, |
| $R^{13}$ bis $R^{17}$ | Wasserstoff, $C_1$- bis $C_4$-Alkyl oder $Si(R^{18})_3$ bedeuten. |

Insbesondere sind die Verbindungen der Formel Ib geeignet, in denen die Cyclopentadienylreste gleich sind.

Beispiele für besonders geeignete Verbindungen sind u.a. Bis(cyclopentadienyl)zirkoniumdichlorid, Bis (pentamethylcyclopentadienyl) -zirkoniumdichlorid, Bis (methylcyclopentadienyl) -zirkoniumdichlorid, Bis (ethylcyclopentadienyl)-zirkoniumdichlorid, Bis (n-butylcyclopentadienyl)-zirkoniumdichlorid und Bis(trimethylsilylcyclopentadienyl)-zirkoniumdichlorid sowie die entsprechenden Dimethylzirkoniumverbindungen.

Von den Verbindungen der Formel Ic sind diejenigen besonders geeignet, in denen

| | |
|---|---|
| $R^5$ und $R^{13}$ | gleich sind und für Wasserstoff oder $C_1$- bis $C_{10}$-Alkylgruppen stehen, |
| $R^9$ und $R^{17}$ | gleich sind und für Wasserstoff, eine Methyl-, Ethyl-, iso-Propyl- oder tert.-Butylgruppe stehen, |
| $R^6$, $R^7$, $R^{14}$ und $R^{15}$ | die Bedeutung<br>$R^7$ und $R^{15}$ $C_1$- bis $C_4$-Alkyl<br>$R^6$ und $R^{14}$ Wasserstoff<br>haben oder zwei benachbarte Reste $R^6$ und $R^7$ sowie<br>$R^{14}$ und $R^{15}$ gemeinsam für 4 bis 18 C-Atome aufweisende cyclische Gruppen stehen, |

$R^{19}$

für 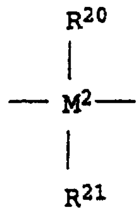 oder 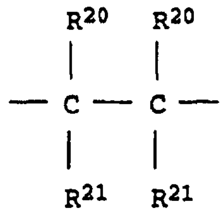 steht,

M für Titan, Zirkonium oder Hafnium und

X für Chlor, $C_1$- bis $C_4$-Alkyl oder Phenyl stehen.

Beispiele für besonders geeignete Komplexverbindungen sind u.a. Dimethylsilandiylbis(cyclopentadienyl)-zirkoniumdichlorid, Dimethylsilandiylbis(indenyl)-zirkoniumdichlorid, Dimethylsilandiylbis(tetrahydroindenyl)-zirkoniumdichlorid, Ethylenbis(cyclopentadienyl)-zirkoniumdichlorid, Ethylenbis(indenyl)-zirkoniumdichlorid, Ethylenbis(tetrahydroindenyl)-zirkoniumdichlorid, Tetramethylethylen-9-fluorenylcyclopentadienylzirkoniumdichlorid, Dimethylsilandiylbis(-3-tert.butyl-5-methylcyclopentadienyl)-zirkoniumdichlorid, Dimethylsilandiylbis(-3-tert.butyl-5-ethylcyclopentadienyl)-zirkoniumdichlorid, Dimethylsilandiylbis (-2-methylindenyl)-zirkoniumdichlorid, Dimethylsilandiylbis (-2-isopropylindenyl) -zirkoniumdichlorid, Dimethylsilandiylbis (-2-tert.butylindenyl) -zirkoniumdichlorid, Diethylsilandiylbis (-2-methylindenyl) -zirkoniumdibromid, Dimethylsilandiylbis(-3-methyl-5-methylcyclopentadienyl)-zirkoniumdichlorid, Dimethylsilandiylbis(-3-ethyl-5-isopropylcyclopentadienyl)-zirkoniumdichlorid, Dimethylsilandiylbis (-2-ethylindenyl) -zirkoniumdichlorid, Dimethylsilandiylbis(-2-methylbenzindenyl)-zirkoniumdichlorid Dimethylsilandiylbis(2-ethylbenzindenyl)zirkoniumdichlorid, Methylphenylsilandiylbis (2-ethylbenzindenyl) zirkoniumdichlorid, Methylphenylsilandiylbis (2-methylbenzindenyl) zirkoniumdichlorid, Diphenylsilandiylbis (2-methylbenzindenyl) zirkoniumdichlorid, Diphenylsilandiylbis (2-ethylbenzindenyl) zirkoniumdichlorid, und Diphenylsilandiylbis(-2-methylindenyl)-hafniumdichlorid sowie die entsprechenden Dimethylzirkoniumverbindungen.

Weitere Beispiele für geeignete Komplexverbindungen sind u.a. Dimethylsilandiylbis (-2-methyl-4-phenylindenyl) zirkoniumdichlorid, Dimethylsilandiylbis(-2-methyl-4-naphthylindenyl)zirkoniumdichlorid, Dimethylsilandiylbis (-2-methyl-4-isopropylindenyl) zirkoniumdichlorid und Dimethylsilandiylbis (-2-methyl-4,6-diisopropylindenyl) zirkoniumdichlorid sowie die entsprechenden Dimethylzirkoniumverbindungen.

Bei den Verbindungen der allgemeinen Formel Id sind als besonders geeignet diejenigen zu nennen, in denen

M für Titan oder Zirkonium,

X für Chlor, $C_1$-bis $C_4$-Alkyl oder Phenyl stehen.

$R^{19}$ für

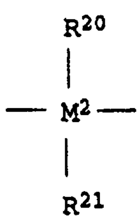 oder 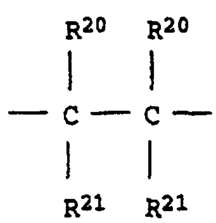

steht,

A für —O—, —S—, $>NR^{23}$

und

$R^5$ bis $R^7$ und $R^9$ für Wasserstoff, $C_1$- bis $C_{10}$-Alkyl, $C_3$- bis $C_{10}$-Cycloalkyl, $C_6$- bis $C_{15}$-Aryl oder $Si(R^{12})_3$ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Als Komponente C) enthält das im bevorzugten Herstellungsverfahren einzusetzende Metallocen-Katalysatorsystem wenigstens eine metalloceniumionenbildende Verbindung, wobei aber keine zwei verschiedenen Alumoxane als Komponente C) verwendet werden.

Geeignete metalloceniumionenbildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel II

$$M^3X^1X^2X^3 \qquad \text{II}$$

bevorzugt, in der

| | |
|---|---|
| $M^3$ | ein Element der III. Hauptgruppe des Periodensystems bedeutet, insbesondere B, Al oder Ga, vorzugsweise B, |
| $X^1$, $X^2$ und $X^3$ | für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl. |

Besonders bevorzugt sind Verbindungen der allgemeinen Formel II, in der $X^1$, $X^2$ und $X^3$ gleich sind, vorzugsweise Tris(pentafluorphenyl)boran.

Als ionische Verbindungen mit lewissauren Kationen sind Verbindungen der allgemeinen Formel III

$$[(Y^{a+})Q_1Q_2...Q_z]^{d+} \qquad \text{III}$$

geeignet, in denen

| | |
|---|---|
| Y | ein Element der I. bis VI. Hauptgruppe oder der I. bis VIII. Nebengruppe des Periodensystems bedeutet, |
| $Q_1$ bis $Q_z$ | für einfach negativ geladene Reste wie $C_1$- bis $C_{28}$-Alkyl, $C_6$- bis $C_{15}$-Aryl, Alkylaryl, Arylalkyl, Halogenalkyl, Halogenaryl mit jeweils 6 bis 20 C-Atomen im Aryl- und 1 bis 28 C-Atome im Alkylrest, $C_3$- bis $C_{10}$-Cycloalkyl, welches gegebenenfalls mit $C_1$- bis $C_{10}$-Alkylgruppen substituiert sein kann, Halogen, $C_1$- bis $C_{28}$-Alkoxy, $C_6$- bis $C_{15}$-Aryloxy, Silyl- oder Mercaptylgruppen |
| a | für ganze Zahlen von 1 bis 6 und |
| z | für ganze Zahlen von 0 bis 5 steht, |
| d | der Differenz a-z entspricht, wobei d jedoch größer oder gleich 1 ist. |

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO-A 91/09882 genannt werden, bevorzugt Tetrakis (pentafluorophenyl)borat.

Ionische Verbindungen mit Brönsted-Säuren als Kationen und vorzugsweise ebenfalls nicht koordinierende Gegenionen sind in der WO-A 91/09882 genannt, bevorzugtes Kation ist das N,N-Dimethylanilinium.

Die Menge der verwendeten metalloceniumionenbildenden Verbindung C) beträgt bevorzugt 0,1 bis 10 Äquivalente, bezogen auf den Metallocenkomplex I.

Besonders geeignet als metalloceniumionenbildende Verbindung C) sind offenkettige oder cyclische Alumoxanverbindungen der allgemeinen Formel IV oder V

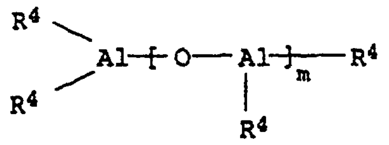

IV

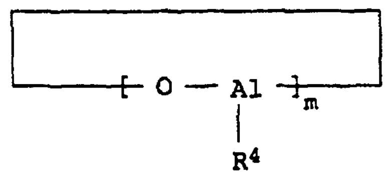

V

wobei

$R^4$ eine $C_1$- bis $C_4$-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Im verwendeten Metallocen-Katalysatorsystem sind als metalloceniumionenbildende Verbindungen C) keine zwei verschiedenen Alumoxane der allgemeinen Formel IV oder V vorhanden. Als verschiedene Alumoxane werden dabei solche Alumoxane der allgemeinen Formeln IV oder V angesehen, welche unterschiedliche Reste $R^4$ aufweisen.

Vorzugsweise werden sowohl die Metallocenkomplexe (Komponente B) als auch die metalloceniumionenbildende Verbindung (Komponente C) in Lösung eingesetzt, wobei aromatische Kohlenwasserstoffe mit 6 bis 20 C-Atomen, insbesondere Xylole und Toluol, besonders bevorzugt sind.

Weiterhin können als Komponente C) Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, eingesetzt werden.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis $10^6$:1, insbesondere im Bereich von 10:1 bis $10^4$:1, liegt.

Das Metallocen-Katalysatorsystem, welches zur Herstellung der in den erfindungsgemäßen siegelbaren Mehrschichtfolien verwendeten Propylen-Terpolymere eingesetzt wird, kann als Komponente D) gegebenenfalls noch eine Metallverbindung der allgemeinen Formel VI

$$M^1 (R^1)_r (R^2)_s (R^3)_t \qquad \text{VI}$$

in der

$M^1$ ein Alkali-, ein Erdalkalimetall oder ein Metall der III. Hauptgruppe des Periodensystems, d.h. Bor, Aluminium, Gallium, Indium oder Thallium bedeutet,

$R^1$ Wasserstoff, $C_1$- bis $C_{10}$-Alkyl, $C_6$- bis $C_{15}$-Aryl, Alkylaryl oder Arylalkyl mit jeweils 1 bis 10 C-Atom im Alkylrest und 6 bis 20 C-Atomen im Arylrest,

$R^2$ und $R^3$ Wasserstoff, Halogen, $C_1$- bis $C_{10}$-Alkyl, $C_6$- bis $C_{15}$-Aryl, Alkylaryl, Arylalkyl oder Alkoxy mit jeweils 1 bis 10 C-Atomen im Alkylrest und 6 bis 20 C-Atomen im Arylrest,

r eine ganze Zahl von 1 bis 3

und

s und t ganze Zahlen von 0 bis 2 bedeuten, wobei die Summe r+s+t der Wertigkeit von $M^1$ entspricht,

enthalten.

Von den Metallverbindungen der allgemeinen Formel VI sind diejenigen bevorzugt, in denen

$M^1$ Lithium, Magnesium oder Aluminium bedeutet und

$R^1$ bis $R^3$ für $C_1$- bis $C_{10}$-Alkyl stehen.

Besonders bevorzugte Metallverbindungen der Formel VI sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn die Komponente D) eingesetzt wird, ist sie bevorzugt in einer Menge von 800:1 bis 1:1, insbesondere 500:1 bis 50:1 (molares Verhältnis von $M^1$ aus Formel VI zu Übergangsmetall M aus Formel I) im Katalysatorsystem enthalten.

Die Komponenten A), B), C) und gegebenenfalls D) werden zusammen als Metallocen-Katalysatorsystem verwendet.

Die Basisschicht der erfindungsgemäßen siegelbaren Mehrschichtfolie enthält insbesondere ein Polyolefin, vorzugsweise ein Propylenpolymer, und gegebenenfalls weitere zugesetzte Additive in jeweils wirksamen Mengen. Im allgemeinen enthält die Basisschicht mindestens 50 Gew.-%, vorzugsweise 75 bis 100 Gew.-%, insbesondere 90 bis 100 Gew.-%, des Propylenpolymeren.

Das Propylenpolymere enthält im allgemeinen 90 bis 100 Gew.-%, vorzugsweise 95 bis 100 Gew.-%, insbesondere 98 bis 100 Gew.-%, Propylen und besitzt im allgemeinen einen Schmelzpunkt von 120°C oder höher, vorzugsweise 150 bis 170°C und im allgemeinen einen Schmelzflußindex von 0,5 g/10 min bis 8 g/10 min, vorzugsweise von 2 g/10 min bis 5 g/10 min, bei 230°C und einem Gewicht von 21,6 kg (DIN 53 735). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Basisschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Polypropylen enthält. Geeignete andere Polyolefine in der Polymermischung sind Polyethylene, insbesondere HDPE, LDPE und LLDPE, wobei der Anteil dieser Polyolefine jeweils 15 Gew.-%, bezogen auf die Polymermischung, nicht übersteigt.

Die Basisschicht kann für opake, weiße oder weiß-opake Folien zusätzlich bis zu 40 Gew.-%, vorzugsweise bis zu 30 Gew.-%, bezogen auf das Gesamtgewicht der Basisschicht, inertes partikelförmiges Material mit einem mittleren Teilchendurchmesser im Bereich von 0,01 bis 8 µm, vorzugsweise von 0,02 bis 2,5 µm, enthalten. Die Anwesenheit des inerten partikelförmigen Materials mit einer Teilchengröße von 1 bis 8 µm bewirkt, daß sich bei der Streckorientierung der Folie bei geeigneten Temperaturen zwischen der Polymermatrix und dem inerten Material Mikrorisse und Mikrohohlräume, sogenannte Voids, ausbilden, im Bereich derer das sichtbare Licht gebrochen wird. Die Folie erhält dadurch ein opakes Aussehen, was sie für bestimmte Verpackungszwecke, insbesondere auf dem Lebensmittelsektor, besonders geeignet macht. Das inerte partikelförmige Material kann anorganischer oder organischer Natur sein. Bei anorganischem Material sind Calciumcarbonat, Aluminiumsilikat, Siliziumdioxid oder Titandioxid, bei organischem Material Polyethylenterephthalat, Polybutylenterephthalat, Polyester, Polyamide, Polystyrole besonders geeignet, wobei auch die Kombination von verschiedenen anorganischen und/oder organischen Partikeln möglich ist.

Die Modifizierung der Basisschicht in der angegebenen Weise ist an sich bekannt und wird durchgeführt wie in der DE-A-43 11 422 beschrieben, auf welche hiermit ausdrücklich Bezug genommen wird. Dort werden Teilchenarten, deren eingesetzte Menge, Modifizierung durch Beschichtung, im einzelnen beschrieben. Weiterhin kann die Basisschicht in einer bevorzugten Ausführungsform Harze und/oder Antistatika enthalten.

Die Herstellung der als Basisschicht vorzugsweise verwendeten Polyolefine kann mit dem gleichen Metallocen-Katalysatorsystem erfolgen wie bereits für die Deckschicht vorstehend beschrieben. Es ist aber auch möglich, anstelle eines Metallocen-Katalysatorsystems ein Ziegler-Natta-Katalysatorsystem zur Herstellung der als Basisschicht vorzugsweise verwendeten Polyolefine einzusetzen. Derartige Ziegler-Natta-Katalysatorsysteme sind u.a. aus der US-A 4 857 613 oder der US-A 5 288 824 bekannt. Die dabei als Basisschicht verwendeten Polyolefine können sowohl eine enge, als auch eine breit verteilte Polydispersität ($M_W/M_N$) aufweisen, welche im Bereich von 1,5 bis 12, insbesondere im Bereich von 1,6 bis 8 liegt.

Die erfindungsgemäße siegelbare Mehrschichtfolie besteht aus wenigstens einer Deckschicht mit einer Dicke von 0,1 bis 10 µm, insbesondere von 0,1 bis 5 µm und wenigstens einer Basisschicht mit einer Dicke von 1 bis 150 µm, insbesondere von 1 bis 100 µm.

Es können auch mehrere Deckschichten und mehrere Basisschichten abwechselnd übereinander gestapelt werden, wodurch die erfindungsgemäße siegelbare Mehrschichtfolie eine sandwichartige Struktur erhält. Besonders bevorzugte siegelbare Mehrschichtfolien sind aus drei Schichten aufgebaut, von denen die obere und die untere Schicht jeweils eine Deckschicht und die dazwischen liegende Schicht eine Basisschicht darstellt.

Um bestimmte Eigenschaften der erfindungsgemäßen siegelbaren Mehrschichtfolie noch weiter zu verbessern, können sowohl die Basisschicht als auch die Deckschicht Zusätze in einer jeweils wirksamen Menge enthalten, vorzugsweise Kohlenwasserstoffharz und/oder Antistatika und/oder Antiblockmittel und/oder Gleitmittel und/oder Stabilisatoren und/oder Neutralisationsmittel, die mit den Polymeren der Basisschicht und der Deckschicht verträglich sind, mit Ausnahme der in der Regel unverträglichen Antiblockmittel. Alle Mengenangaben in der folgenden Ausführung in Gewichtsprozent (Gew.-%) beziehen sich jeweils auf die Schicht oder Schichten, der oder denen das Additiv zugesetzt sein kann.

Ein niedermolekulares Harz wird bevorzugt der Basis- und/oder der Deckschicht zugesetzt. Kohlenwasserstoffharze sind niedermolekulare Polymere, deren Molekulargewicht ($M_n$) im allgemeinen in einem Bereich von 300 bis 8 000, vorzugsweise 400 bis 5 000, insbesondere 500 bis 2 000, liegt. Damit ist das Molekulargewicht der Harze deutlich niedriger als das der Propylenpolymeren, welche die Hauptkomponente der einzelnen Folienschichten bilden und im allgemeinen ein Molekulargewicht ($M_n$) von über 60 000 haben. Der Anteil des Harzes liegt in einem Bereich von 1 bis 30 Gew.-%, vorzugsweise 2 bis 10 Gew.-%. Der Erweichungspunkt des Harzes liegt zwischen 100 und 180°C (gemessen nach DIN 1995-U4, entspricht ASTM E-28), vorzugsweise über 120 bis 160°C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymere von Terpenen, d.h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, α-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymere, Styrolcopolymere, Cyclopentadienhomopolymere, Cyclopentadiencopolymere und/oder Terpenpolymere mit einem Erweichungspunkt von jeweils oberhalb 135°C eingesetzt (bei den ungesättigten Polymeren ist das hydrierte Produkt bevorzugt). Ganz besonders bevorzugt werden die Cyclopentadienpolymere mit einem Erweichungspunkt von 140°C und darüber in den einzelnen Schichten eingesetzt.

Bevorzugte Antistatika sind Alkali-alkansulfonate, polyethermodifizierte, d.h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-($C_1$-$C_4$)- alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.-%.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,3 bis 2,0 Gew.-% bevorzugt, wobei insbesondere Polydimethylsiloxane mit einer Viskosität von 10 000 bis 1 000 000 $mm^2/s$ eingesetzt werden.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einem Molekulargewicht ($M_n$) von mehr als 500 bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)-benzol sind besonders vorteilhaft.

Die Antiblockmittel werden bevorzugt den Deckschichten zugesetzt. Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymere wie Polyamide, Polyester, Polycarbonate und dergleichen, bevorzugt werden Benzoguanamin-formaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Neutralisationsmittel sind vorzugsweise Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 $m^2/g$.

Die Erfindung betrifft weiterhin ein Verfahren zur Herstellung der erfindungsgemäßen Mehrschichtfolie nach dem sogenannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Malze/n abgezogen wird, die Folie anschließend gegebenenfalls biaxial gestreckt (orientiert) und die gegebenenfalls biaxial gestreckte Folie thermofixiert und anschließend aufgewickelt wird.

Nach einem besonders bevorzugten Verfahren wird die biaxial gestreckte Folie nach dem Thermoformen noch corona- oder flammbehandelt, und zwar an der zur Coronabehandlung vorgesehen Oberflächenschicht.

Die biaxiale Streckung (Orientierung) ist bevorzugt und kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, besonders günstig ist.

Zunächst wird wie beim Coextrusionsverfahren üblich, das Polymere oder die Polymermischung der einzelnen Schichten in einem Extruder komprimiert und verflüssigt, wobei die gegebenenfalls zugesetzten Additive bereits im Polymer enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Vorzugsweise wird die so erhaltene Folie dann längs und quer zur Extrusionsrichtung gestreckt, was zu einer Orientierung der Molekülketten führt. In Längsrichtung wird vorzugsweise 4:1 bis 9:1 und in Querrichtung vorzugsweise 5:1 bis 11:1 gestreckt. Das Längsstrecken wird man zweckmäßigerweise mit Hilfe zweier entsprechend dem angestrebten Streckverhältnis verschieden schnelllaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 Sekunden lang bei der Temperatur von 110 bis 130°C gehalten wird. Anschließend wird die Folie in üblicher Weise mit einer Aufwickeleinrichtung aufgewickelt.

Es hat sich als besonders günstig erwiesen, die Abzugswalze oder walzen, durch die die ausgepreßte Folie auch abgekühlt und verfestigt wird, bei einer Temperatur von 10 bis 90°C zu halten, bevorzugt bei 20 bis 60°C.

Darüber hinaus wird die Längsstreckung vorteilhafterweise bei einer Temperatur von weniger als 140°C, vorzugsweise im Bereich von 125 bis 135°C, und die Querstreckung bei einer Temperatur größer 140°C, vorzugsweise bei 145 bis 160°C, durchgeführt.

Gegebenenfalls kann/können wie oben erwähnt nach der biaxialen Streckung eine oder beide Oberfläche/n der Folie nach einer der bekannten Methoden corona- oder flammbehandelt werden, wobei für eine Flammbehandlung mit polarisierter Flamme (vgl. US-A-4,622,237) eine elektrische Gleichspannung zwischen einem Brenner (negativer Pol) und einer Kühlwalze angelegt wird. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Für die alternative Coronabehandlung wird die Folie zwischen zwei als Elektroden dienenden Leiterelementen

hindurchgeführt, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Die erfindungsgemäßen siegelbaren Mehrschichtfolien zeichnen sich u.a. durch abgesenkte Siegeltemperaturen, sehr geringe extrahierbare Anteile und gute organoleptische Eigenschaften aus. Sie sind ferner durch hohe Glanzwerte, gute Hafteigenschaften und sehr hohe Transparenz gekennzeichnet. Mit Hilfe des ebenfalls erfindungsgemäßen Verfahrens können derartige siegelbare Mehrschichtfolien ohne großen verfahrenstechnischen Aufwand hergestellt werden.

Die erfindungsgemäßen siegelbaren Mehrschichtfolien eignen sich insbesondere als Bestandteil von Verpackungen.

Beispiele

Beispiel 1

Herstellung eines Metallocen-Trägerkatalysators

a) Herstellung des Trägermaterials

1000 g Kieselgel (SG 332, Teilchendurchmesser 50 µm, Fa. Grace; 8 Stunden bei 180°C im Vakuum (1 mbar) ausgeheizt) wurden in 5 l Toluol unter Stickstoff ($N_2$)-Atmosphäre suspendiert. Bei einer Temperatur von 18°C wurden 7,75 l (6,83 kg) 1,53 molare Methylaluminoxan(MAO)lösung (in Toluol, Fa. Witco) über 120 Minuten zugegeben. Anschließend wurde 7 Stunden lang bei Raumtemperatur nachgerührt, filtriert und der Filterkuchen zweimal mit je 2,5 l Toluol gewaschen. Anschließend wurde im Vakuum getrocknet.

b) Beladung mit dem Metallocenkomplex

1 kg des unter a) hergestellten MAO beladenen Kieselgels wurde in einem evakuierten und mit Stickstoff belüfteten Gefäß vorgelegt. Anschließend wurde unter Rühren eine Lösung von 5,8 g (10 mmol) rac.-Dimethylsilylenbis (2-methylbenzindenyl) zirkondichlorid in 1,32 l 1,53 molarer MAO-Lösung (Toluol) zugegeben. Nach dem Druckausgleich mit $N_2$ wurde 30 Minuten bei Raumtemperatur durchmischt. Dann wurde, zunächst bei 20°C, die Hauptmenge Lösungsmittel im Vakuum abdestilliert (bis kein Lösungsmittel mehr überging). Anschließend wurde die Temperatur in 5°C Schritten auf 55°C erhöht und der Katalysator solange getrocknet, bis er als oranges, gut rieselfähiges Pulver zurückblieb.

Vergleichsbeispiel A

Herstellung von Propylen/Ethen-Copolymeren

In einem trockenen, $N_2$ gespülten 10 1 Autoklaven wurden 20 mmol Triisobutylaluminium (TiBA; 10 ml einer 2-molaren Lösung in Heptan) vorgelegt. Nach Zugabe von 150 mg Antistatikum-Lösung (Stadis® 450, Du Pont) und 3500 g flüssigen Propylens wurden unter Rühren bei Raumtemperatur 1020 mg des im Beispiel 1 hergestellten Metallocen-Trägerkatalysators über eine Schleuse mit $N_2$ eingeschossen. Anschließend wurde der Autoklav auf 60°C aufgeheizt und 90 min bei dieser Temperatur polymerisiert. Während der Polymerisation wurden kontinuierliche pro Stunde 117 g Ethen zudosiert, insgesamt 175 g Ethen (5 Gew.-%). Nach Ablauf der Reaktionszeit wurde die Polymerisation durch Ablassen des restlichen Ethen/Propylen-Gemisches abgebrochen und das Produkt über ein Bodenventil abgelassen. Es wurden 1900 g Polymergries erhalten (Produktivität: 1860 g Copolymer/g Katalysator).

Der Versuch wurde noch dreimal mit 965, 990 und 1000 mg des im Beispiel 1 hergestellten Metallocen-Katalysators wiederholt (Ausbeuten: 1850, 2100 und 1870 g Propylen/Ethen-Copolymer). Das Copolymer aller vier Versuche wurde gemischt und granuliert. Die am Granulat gemessenen Polymerdaten waren: $T_m$: 121,6°C; $X_L$: 2,6 Gew.-%; $M_W$: 223 400 g/mol; $M_w/M_n$: 1,80.

Vergleichsbeispiel B

Herstellung von Propylen/But-1-en-Copolymeren

Entsprechend dem Beispiel 4 der DE-A 19 533 337 wurde durch kontinuierliche Gasphasenpolymerisation ein Propylen/But-1-en-Copolymer hergestellt, welches folgenden Eigenschaften aufwies: $C_4$-Gehalt: 2,2 mol-%

(IR-Spektroskopie); $T_m$: 135,3°C; $X_L$: 0,6 Gew.-%; $M_W$: 258 860 g/mol; $M_w/M_n$: 1,74.

Beispiel 2

Herstellung eines Propylen/Ethen/But-1-en-Terpolymeren

In einem trockenen, $N_2$ gespülten 10 l Autoklaven wurden 20 mmol Triisobutylaluminium (TiBA; 10 ml einer 2-molaren Lösung in Heptan) vorgelegt. Nach Zugabe von 150 mg Antistatikum-Lösung (Stadis® 450, Du Pont) wurden 2000 g flüssiges Propylen, 40 g But-1-en (2 Gew.-%) und 40 g Ethen (2 Gew.-%) eindosiert. Dann wurden bei Raumtemperatur 790 mg Metallocen-Trägerkatalysator des Beispiels 1 über eine Schleuse mit $N_2$ eingeschossen. Anschließend wurde der Autoklav auf 60°C aufgeheizt und 90 min bei dieser Temperatur polymerisiert. Nach Ablauf der Reaktionszeit wurde die Polymerisation durch Ablassen des restlichen Monomeren-Gemisches abgebrochen und das Produkt über ein Bodenventil abgelassen. Es wurden 680 g Polymergries erhalten (Produktivität: 860 g Terpolymer/g Katalysator) .

Polymerdaten: $C_2$-Gehalt: 2,6 mol-%; $C_4$-Gehalt: 0,5 mol-% (IR-Spektroskopie); $T_m$: 119,4°C; $X_L$: 0,6 Gew.-%; $M_W$: 232 478 g/mol: $M_w/M_n$: 1,70; Anteil regioregulärer '1-2'-insertierter Propyleneinheiten entsprechend der Formel (1): 99,28; Schmelzenthalpie: 79 J/g.

Beispiel 3

Herstellung eines Propylen/Ethen/But-1-en-Terpolymeren

In einem trockenen, $N_2$ gespülten 10 l Autoklaven wurden 20 mmol Triisobutylaluminium (TiBA; 10 ml einer 2-molaren Lösung in Heptan) vorgelegt. Nach Zugabe von 150 mg Antistatikum-Lösung (Stadis® 450, Du Pont) wurden 2000 g flüssiges Propylen und 40 g But-1-en (2 Gew.-%) eindosiert. Dann wurden bei Raumtemperatur 815 mg Metallocen-Trägerkatalysator vom Beispiel 1 über eine Schleuse mit $N_2$ eingeschossen. Anschließend wurde der Autoklav auf 60°C aufgeheizt und es wurde 90 min bei dieser Temperatur polymerisiert. Während der Polymerisation wurden kontinuierlich pro Stunde 27 g Ethen zudosiert, d.h. insgesamt 40 g (2 Gew.-%). Nach Ablauf der Reaktionszeit wurde die Polymerisation durch Ablassen des restlichen Monomeren-Gemisches abgebrochen und das Produkt über ein Bodenventil abgelassen. Es wurden 1120 g Polymergries erhalten (Produktivität: 1370 g Terpolymer/g Katalysator).

Polymerdaten: $C_2$-Gehalt: 2,2 mol-%; $C_4$-Gehalt: 0,4 mol-% (IR-Spektroskopie); $T_m$: 122,8°C; $X_L$: 0,5 Gew.-%; $M_W$: 247 345 g/mol; $M_w/M_n$: 1,70; Anteil regioregulärer '1-2'-insertierter Propyleneinheiten entsprechend der Formel (1): 99,24; Schmelzenthalpie: 81 J/g.

Für die Herstellung der Siegelschicht in Beispiel 6 wurde die oben beschriebene Polymerisation sechsmal wiederholt, das Polymere gemischt und granuliert. Eine Kontrollmessung am Granulat ergab ein $M_w$ von 233 520 g/mol und eine Polydispersität $M_w/M_n$ von 1,64. Der in kaltem n-Hexan extrahierbare Anteil (gemäß FDA 177 1520) lag bei 0,4 Gew.-%.

Beispiel 4

Herstellung eines Propylen/Ethen/Hex-1-en-Terpolymeren

In einem trockenen, $N_2$ gespülten 10 l Autoklaven wurden 20 mmol Triisobutylaluminium (TiBA; 10 ml einer 2-molaren Lösung in Heptan) vorgelegt. Nach Zugabe von 150 mg Antistatikum-Lösung (Stadis® 450, Du Pont) wurden 2000 g flüssiges Propylen, 40 g But-1-en (2 Gew.-%) und 40 g Hex-1-en (2 Gew.-%) eindosiert. Dann wurden bei Raumtemperatur 905 mg Metallocen-Trägerkatalysator vom Beispiel 1 über eine Schleuse mit $N_2$ eingeschossen. Anschließend wurde der Autoklav auf 60°C aufgeheizt und 90 min bei dieser Temperatur polymerisiert. Nach Ablauf der Reaktionszeit wurde die Polymerisation durch Ablassen des restlichen Monomeren-Gemisches abgebrochen und das Produkt über ein Bodenventil abgelassen. Es wurden 543 g Polymergries erhalten (Produktivität: 600 g Terpolymer/g Katalysator).

Polymerdaten: $C_4$-Gehalt: 3,5 mol-%; $C_6$-Gehalt: 1,1 mol-% ($^{13}C$-NMR); $T_m$: 124,4°C; $X_L$: 0,3 Gew.-%; $M_W$: 339 062 g/mol; $M_w/M_n$: 1,84; Anteil regioregulärer '1-2'-insertierter Propyleneinheiten entsprechend der Formel (1): 99,12; Schmelzenthalpie; 79 J/g.

Beispiele 5 bis 7 - Vergleichsbeispiele C bis E

Herstellung von Mehrschichtfolien

Durch Coextrusion und anschließende, stufenweise Orientierung in Längs- und Querrichtung wurden dreilagige biaxial orientierte Polypropylen-Folien (BOPP-Folien) mit einem A'B'A'-Schichtaufbau (A': Deckschicht; B':Basisschicht) hergestellt. Die Gesamtfolienstärke betrug ca. 20 µm, die der Deckschicht ca. 1 µm. Für die Basisschicht B' wurde ein mit dem im Beispiel 1 beschriebenen Metallocenkatalysator in kontinuierlicher Gasphasenpolymerisation bei 60°C und 24 bar hergestelltes Propylenhomopolymer mit einem Schmelzflußindex (bei 230°C und 2,16 kg nach DIN 53735) von 4,0 g/10 min, einem Schmelzpunkt von 145°C und einer Polydispersität $M_w/M_n$ von 1,9 eingesetzt. Alle Polymeren wurden vor der Herstellung der Folien mit jeweils 1000 ppm Sylobloc® 45, 1000 ppm Irgafos® 168, 600 ppm Ca-Stearat und 500 ppm Irganox® 1010 versetzt und granuliert.

Im erfindungsgemäßen Beispiel 5 wurde das im Beispiel 2 hergestellte Propylen/Ethen/But-1-en-Terpolymer als Deckschicht A' verwendet, im erfindungsgemäßen Beispiel 6 das Propylen/Ethen/But-1-en-Terpolymere des Beispiels 3 und im erfindungsgemäßen Beispiel 7 das Propylen/But-1-en/Hex-1-en-Terpolymere des Beispiels 4.

Als Deckschicht A' wurde im Vergleichsbeispiel C das Propylen/Ethylen-Copolymere des Vergleichsbeispiels A eingesetzt. Im Vergleichsbeispiel D fand das Propylen/But-1-en-Copolymere aus Vergleichsbeispiel B als Deckschicht A' Verwendung. Im Vergleichsbeispiel E wurde als Deckschicht A' ein Propylenterpolymer (Novolen® 3520L von Targor GmbH) verwendet. Novolen® 3520L ist ein Propylenterpolymer mit 4,2 Gew.-% einpolymerisiertem Ethen und 1,9 Gew.-% einpolymerisiertem But-1-en und einem Schmelzflußindex von 5 g/10 min, bei 230°C und 2,16 kg, nach ISO 1133, welches durch Gasphasenpolymerisation von Propylen, Ethen und But-1-en mit Hilfe eines Ziegler-Natta-Katalysators, der u.a. in der US-A 5,288,824 beschrieben ist, erhalten worden ist.

Als Basisschicht B' wurde in allen Beispielen 5 bis 7 und in allen Vergleichsbeispielen C bis E das oben beschriebene, mit dem aus dem Beispiel 1 erhaltenen Metallocen-Katalysator hergestellte Propylenhomopolymer eingesetzt.

Die bei der Prüfung der BOPP-Folien des A'B'A'-Schichtaufbaus gefundenen Eigenschaften sind in der nachfolgenden Tabelle I aufgeführt.

Ergänzende Erläuterungen:

Bei Stadis® 450 von Du Pont handelt es sich um ein kommerziell erhältliches Produkt in Form einer Mischung aus Toluol, Isopropanol, Dodecylbenzolsulfonsäure, einem Polyamin, einem Copolymer aus Dec-1-en und $SO_2$, sowie Dec-1-en.

Sylobloc® von Grace ist ein Antiblockmittel auf Basis von $SiO_2$.

Bei Irganox® 1010 von Ciba-Geigy handelt es sich um Pentaerythrityltetrakis [3-(3,5-bis(1,1-dimethylethyl)-4-hydroxyphenol)propionat] und bei Irgafos® 168, ebenfalls von Ciba-Geigy, um Tris(2,4-bis-tert.butylphenol)phosphit.

Die in den Beispielen aufgeführten Eigenschaften wurden folgendermaßen bestimmt:

| | |
|---|---|
| Comonomergehalt bzw. Anteil '1-3'-insertierter Propeneinheiten: | mittels $^{13}C$-NMR oder mittels Infrarotspektroskopie |
| Schmelzpunkt ($T_M$) : | mittels DSC (differential scanning calorimetry) |

Xylollösliche Anteile (XL):

In einen 1-Liter-Dreihalskolben mit Rührer, Rückflußkühler und Thermometer wurden 500 ml destilliertes Xylol (Isomerengemisch) eingefüllt und auf 100°C erhitzt. Bei dieser Temperatur wurde das Polymere eingefüllt, anschließend auf den Siedepunkt des Xylols erhitzt und 60 min am Rückfluß gehalten. Anschließend wurde die Wärmezufuhr abgebrochen, innerhalb von 20 min mit einem Kältebad auf 5°C abgekühlt und dann wieder auf 20°C erwärmt. Diese Temperatur wurde für 30 min gehalten. Das ausgefallene Polymerisat wurde abfiltriert und von dem Filtrat exakt 100 ml in einen vorher tarierten 250-ml-Einhalskolben gefüllt. Daraus wurde das Lösungsmittel am Rotationsverdampfer entfernt. Anschließend wurde der verbleibende Rückstand im Vakuumtrockenschrank bei 80°C/200 Torr 2 Stunden lang getrocknet. Nach dem Erkalten wurde ausgewogen.

Der xylollösliche Anteil ergibt sich aus

$$X_L = \frac{g \times 500 \times 100}{G \times V}$$

$X_L$ = xylollöslicher Anteil in %
g = gefundene Menge
G = Produkteinwaage
V = Volumen der eingesetzten Filtratmenge

| | |
|---|---|
| Molmasse (Zahlenmittel) $M_N$: | mittels Gelpermeationschromatographie |
| Molmasse (Gewichtsmittel) $M_W$: | mittels Gelpermeationschromatographie |
| Polymerdispersität $M_W$ / $M_N$: | mittels Gelpermeationschromatographie |
| Schmelzflußindex (MFR): | nach ISO 1133 |
| Schmelzenthalpie: | mittels DSC, bei einer Aufheizrate von 20°C/min |
| Streuwert der Folie: | nach ASTM D 1003 |
| Glanz, bei 20°C und 60°C: | nach DIN 67530 |
| Siegeltemperatur: | Mit einem Siegelgerät wurden heißgesiegelte Proben hergestellt, wobei die Siegeltemperatur in 1°C-Schritten erhöht wurde (Siegeldruck: 0,35 N/cm$^2$, Schweißzeit: 0,5 s). Nach dem Abkühlen wurde aus der Siegelnaht ein Prüfstreifen mit 15 mm Breite geschnitten und in einer Zugprüfmaschine die zum Öffnen benötigte Kraft gemessen. Als Siegeltemperatur ist die Temperatur angegeben, bei der die zum öffnen benötigte Kraft mindestens 7,5 N/15 mm erreicht. |
| Druckfarbenhaftung, Metallhaftung: | Zur Beurteilung der Druckfarben bzw. der Metallhaftung wurden die Folien zunächst entsprechend der US-A 4,622,237 coronabehandelt und 14 Tage später entweder bedruckt oder metallisiert. Die Farb- bzw. Metallhaftung wurde mittels Klebebandtest beurteilt. Konnte mittels Klebeband keine Farbe bzw. kein Metall abgelöst werden, so wurde die Haftung mit sehr gut und bei deutlicher Ablösung von Farbe bzw. Metall mit schlecht beurteilt. |

Tabelle I: Eigenschaften der Mehrschichtfolien

| Beispiele/ Vergleichs-beispiele | Beispiel 5 | Beispiel 6 | Beispiel 7 | Vergleichs-beispiel C | Vergleichs-beispiel D | Vergleichs-beispiel E |
|---|---|---|---|---|---|---|
| Deckschicht | aus Bsp. 2 | aus Bsp. 3 | aus Bsp. 4 | aus Vergleichs-beispiel A | aus Vergleichs-beispiel B | Novolen 3520 L |
| Streuwert der Folie (ASTM D1003) | 0,2 | 0,2 | 0,1 | 0,2 | 0,2 | 0,5 |
| Glanz (20°) (DIN 67 530) | 126 | 124 | 129 | 123 | 128 | 102 |
| Glanz (60°) (DIN 67 530) | 148 | 155 | 153 | 147 | 149 | 124 |
| Druckfarben-haftung | sehr gut | sehr gut | sehr gut | sehr gut | sehr gut | mäßig |
| Metallhaftung | sehr gut | sehr gut | sehr gut | sehr gut | sehr gut | schlecht |
| $T_m$ der Siegel-schicht [°C] | 119,4 | 122,8 | 124,4 | 121,6 | 135,3 | 130,2 |
| $X_L$ der Siegel-schicht [Gew.-%] | 0,6 | 0,5 | 0,3 | 2,6 | 0,6 | ca. 8 |

| Beispiele/ Vergleichs-beispiele | Beispiel 5 | Beispiel 6 | Beispiel 7 | Vergleichs-beispiel C | Vergleichs-beispiel D | Vergleichs-beispiel E |
|---|---|---|---|---|---|---|
| Siegel-temperatur [°C] | 105 | 109 | 110 | 111 | 124 | 120 |
| Δ ($T_m$-Siegel-temp.) [°C] | 14,4 | 13,8 | 14,4 | 10,6 | 11,3 | 10,8 |

Aus der Tabelle I geht u.a. hervor, daß sich die erfindungsgemäßen siegelbaren Mehrschichtfolien (Beispiele 5 bis 7) gegenüber den aus dem Stand der Technik bekannten Mehrschichtfolien (Vergleichsbeispiele C bis E) u.a. durch einen erhöhten Glanz, eine verbesserte Haftung, eine abgesenkte Siegeltemperatur und verringerte xylollösliche Anteile auszeichnen.

## Patentansprüche

1. Siegelbare Mehrschichtfolie aus mindestens einer Deckschicht und mindestens einer Basisschicht, wobei die Deckschicht aus einem Propylen-Terpolymeren besteht, **dadurch gekennzeichnet, daß** das Propylen-Terpolymer 80 bis 99,5 mol-% Struktureinheiten, die sich vom Propylen ableiten, 0,2 bis 15 mol-% Struktureinheiten, die sich von Ethen oder einem $C_4$-$C_6$-1-Olefin (I) ableiten und 0,3 bis 15 mol-% Struktureinheiten, die sich von einem weiteren, vom $C_4$-$C_6$-1-Olefin (I) verschiedenen, $C_4$-$C_{12}$-1-Olefin (II) ableiten enthält und wobei das Propylen-Terpolymere mittels Metallocen-Katalysatoren hergestellt ist.

2. Mehrschichtfolie nach Anspruch 1, wobei das Propylen-Terpolymere der Deckschicht einen Anteil regioregulärer '1-2'-insertierter Propyleneinheiten entsprechend der Formel (1)

$$\frac{['1\text{-}2']}{['1\text{-}2'] + ['2\text{-}1'] + ['1\text{-}3']} \qquad (1)$$

   von mehr als 0,97 aufweist.

3. Mehrschichtfolie nach den Ansprüchen 1 oder 2, wobei das Propylen-Terpolymere der Deckschicht einen Schmelzpunkt ($T_M$), ermittelt nach dem DSC-Peakmaximum, von weniger als 135°C und ein Gewichtsmittel der Molmasse ($M_W$) von mehr als 80000 g/mol aufweist.

4. Mehrschichtfolie nach den Ansprüchen 1 bis 3, wobei das Propylen-Terpolymere der Deckschicht einen xylollöslichen Anteil (XL) in Gew.-% aufweist, der der folgenden Ungleichung (2)

$$X_L \leq 1411{,}21 \exp(-0{,}0591\ T_M) - 0.05 \qquad (2)$$

   genügt, bei welcher $T_M$ für den Schmelzpunkt in °C steht.

5. Mehrschichtfolie nach den Ansprüchen 1 bis 4, wobei das Propylen-Terpolymere der Deckschicht eine Polydispersität ($M_W/M_N$) von weniger als 2,25 aufweist.

6. Mehrschichtfolie nach den Ansprüchen 1 bis 5, wobei die Basisschicht aus einem Polyolefin besteht.

7. Mehrschichtfolie nach dem Anspruch 6, wobei die Basisschicht aus Polypropylen besteht.

8. Mehrschichtfolie nach den Ansprüchen 1 bis 7, wobei diese aus wenigstens einer Deckschicht einer Dicke von 0,1 bis 5 µm und wenigstens einer Basisschicht einer Dicke von 1 bis 100 µm besteht.

9. Mehrschichtfolie nach den Ansprüchen 1 bis 7, wobei diese aus drei Schichten aufgebaut ist, von denen die obere und die untere Schicht jeweils eine Deckschicht und die dazwischen liegende Schicht eine Basisschicht darstellt.

10. Verfahren zur Herstellung einer Mehrschichtfolie nach den Ansprüchen 1 bis 9, **dadurch gekennzeichnet, daß** die den einzelnen Schichten der Folie entsprechenden Schmelzen durch eine Flachdüse coextrudiert werden, die auf diese Weise erhaltene coextrudierte Folie zur Verfestigung auf wenigstens einer Walze abgezogen, danach biaxial gestreckt, thermofixiert und anschließend aufgewickelt wird.

11. Verfahren nach Anspruch 10, **dadurch gekennzeichnet, daß** die biaxial gestreckte Folie nach dem Thermofixieren noch coronaoder flammbehandelt wird.

12. Verpackung, enthaltend mindestens eine Mehrschichtfolie nach den Ansprüchen 1 bis 9.

## Claims

1. A sealable coextruded film made from at least one outer layer and from at least one base layer, where the outer layer is composed of a propylene terpolymer which comprises from 80 to 99.5 mol% of structural units derived from propylene, from 0.2 to 15 mol% of structural units derived from ethene or from a $C_4$-$C_6$ 1-olefin (I) and from 0.3 to 15 mol% of structural units derived from another $C_4$-$C_{12}$ 1-olefin (II) different from the $C_4$-$C_6$ 1-olefin (I), and where the propylene terpolymer has been prepared using metallocene catalysts.

2. A coextruded film as claimed in claim 1, where the propylene terpolymer of the outer layer has a proportion of regioregular '1-2'-inserted propylene units given by the formula (1)

$$\frac{['1\text{-}2']}{['1\text{-}2']+['2\text{-}1']+['1\text{-}3']} \quad (1)$$

of more than 0.97.

3. A coextruded film as claimed in claim 1 or 2, where the propylene terpolymer of the outer layer has a melting point ($T_M$), determined from the DSC peak, of less than 135°C and a weight-average molar mass ($M_W$) greater than 80,000 g/mol.

4. A coextruded film as claimed in any of claims 1 to 3, where the propylene terpolymer of the outer layer has a xylene-soluble fraction (XL) in % by weight which satisfies the following expression (2)

$$X_L \leq 1411.21 \exp(-0.0591\ T_M) - 0.05 \quad (2)$$

where $T_M$ is the melting point in °C.

5. A coextruded film as claimed in any of claims 1 to 4, where the propylene terpolymer of the outer layer has a polydispersity ($M_W/M_N$) of less than 2.25.

6. A coextruded film as claimed in any of claims 1 to 5, where the base layer is composed of a polyolefin.

7. A coextruded film as claimed in claim 6, where the base layer is composed of polypropylene.

8. A coextruded film as claimed in any of claims 1 to 7, which is composed of at least one outer layer of thickness from 0.1 to 5 µm and of at least one base layer of thickness from 1 to 100 µm.

9. A coextruded film as claimed in any of claims 1 to 7, which has been built up from three layers, of which the upper and the lower layer are both outer layers and the layer between these is a base layer.

10. A process for producing a coextruded film as claimed in any of claims 1 to 9, which comprises coextruding, through a flat-film die, the melts corresponding to the individual layers of the film, taking off the resultant coextruded film for solidification on at least one roll, and then biaxially stretching, heat-setting and winding up the film.

11. A process as claimed in claim 10, wherein the biaxially stretched film, after heat-setting, is then corona- or flame-treated.

12. Packaging comprising at least one coextruded film as claimed in any of claims 1 to 9.

## Revendications

1. Feuille multicouche thermoscellable, constituée d'au moins une couche de couverture et d'au moins une couche de base, la couche de couverture étant constituée d'un terpolymère de propylène, **caractérisée en ce que** le terpolymère de propylène contient de 80 à 99,5 % en moles de motifs structuraux qui dérivent du propylène, de 0,2 à 15 % en moles de motifs structuraux qui dérivent de l'éthène ou d'une 1-oléfine (I) en $C_4$-$C_6$, et de 0,3 à 15

% en moles de motifs structuraux qui dérivent d'une autre 1-oléfine (II) en $C_4$-$C_{12}$, différente de la 1-oléfine (I) en $C_4$-$C_6$, le terpolymère du propylène étant préparé à l'aide de catalyseurs à base d'un métallocène.

**2.** Feuille multicouche selon la revendication 1, dans laquelle le terpolymère du propylène de la couche de couverture contient une proportion supérieure à 0,97 de motifs propylène régio-réguliers à insertion '1-2' correspondant à la formule (1)

$$\frac{[1'\text{-}2']}{['1\text{-}2']+['2\text{-}1']+[1'\text{-}3']} \qquad (1)$$

**3.** Feuille multicouche selon les revendications 1 ou 2, dans laquelle le terpolymère du propylène de la couche de couverture a un point de fusion ($T_M$), déterminé par le maximum du pic en ATD, inférieur à 135°C, et une masse moléculaire moyenne en masse ($M_W$) supérieure à 80 000 g/mole.

**4.** Feuille multicouche selon les revendications 1 à 3, dans laquelle le terpolymère du propylène de la couche de couverture contient une fraction soluble dans le xylène ($X_L$), en % en poids, satisfaisant à l'inéquation (2) suivante :

$$X_L \leq 1411{,}21 \exp(-0{,}0591\ T_M) - 0{,}05 \qquad (2)$$

où $T_M$ est le point de fusion, en °C.

**5.** Feuille multicouche selon les revendications 1 à 4, dans laquelle le terpolymère du propylène de la couche de couverture a une polydispersité ($M_W/M_N$) inférieure à 2,25.

**6.** Feuille multicouche selon les revendications 1 à 5, dans laquelle la couche de base est constituée d'une polyoléfine.

**7.** Feuille multicouche selon la revendication 6, dans laquelle la couche de base est constituée de polypropylène.

**8.** Feuille multicouche selon les revendications 1 à 7, qui est constituée d'au moins une couche de couverture ayant une épaisseur de 0,1 à 5 µm et d'au moins une couche de base ayant une épaisseur de 1 à 100 µm.

**9.** Feuille multicouche selon les revendications 1 à 7, qui est constituée de trois couches, dont la couche supérieure et la couche inférieure représentent chacune une couche de couverture, la couche située entre ces dernières représentant une couche de base.

**10.** Procédé de fabrication d'une couche multicouche selon les revendications 1 à 9, **caractérisé en ce que** les masses fondues correspondant aux différentes couches de la feuille sont coextrudées par une filière plate, la feuille coextrudée obtenue de cette manière est, pour solidification, tirée sur au moins un cylindre, puis soumise à une orientation biaxiale, thermofixée, puis bobinée.

**11.** Procédé selon la revendication 10, **caractérisé en ce que** la feuille à orientation biaxiale subit encore, après le thermofixage, un traitement corona ou à la flamme.

**12.** Emballage contenant au moins une feuille multicouche selon les revendications 1 à 9.